# FASCICULE DE BREVET EUROPEEN

(11) **EP 2 117 773 B1**
(45) Date de publication et mention de la délivrance du brevet: **10.03.2010**
(21) Numéro de dépôt: 08761760.1
(22) Date de dépôt: 14.01.2008
(51) Int. Cl.: B24B 9/14, G02C 13/00

(54) **MACHINE DE DÉTOURAGE D'UNE LENTILLE DE LUNETTES, POURVUE D'UN PORTE- OUTILS TOURNANT SUR LEQUEL SONT MONTÉS PLUSIEURS OUTILS DE TRAVAIL**
BRILLENGLAS-SCHNEIDEMASCHINE MIT ROTIERENDEM WERKZEUGTRÄGER ZUR AUFNAHME MEHRERER ARBEITSWERKZEUGE
SPECTACLE LENS TRIMMING MACHINE WITH A ROTATING TOOL CARRIER ON WHICH ARE MOUNTED SEVERAL WORKING TOOLS

(30) Priorité: 13.02.2007 FR 0701037
(43) Date de publication de la demande: 18.11.2009
(73) Titulaire: ESSILOR INTERNATIONAL (COMPAGNIE GENERALE D'OPTIQUE), 94220 Charenton-le-Pont (FR)
(72) Inventeur: NAUCHE, Michel, F-94220 Charenton (FR)
(74) Mandataire: Chauvin, Vincent
(86) Numéro de dépôt international: PCT/FR2008/000039
(87) Numéro de publication internationale: WO 2008/107532

(56) Documents cités:
- FR-A- 2 887 168
- FR-A1- 2 614 227
- US-A- 5 993 295

## Description

### DOMAINE TECHNIQUE AUQUEL SE RAPPORTE L'INVENTION

La présente invention concerne de manière générale le montage de lentilles ophtalmiques d'une paire de lunettes correctrices sur une monture et vise plus particulièrement une machine et un procédé de détourage d'une lentille.

### ARRIÈRE-PLAN TECHNOLOGIQUE

La partie technique du métier de l'opticien consiste à monter une paire de lentilles ophtalmiques sur la monture choisie par le futur porteur. Pour cela, l'opticien doit procéder au détourage de chaque lentille qui consiste à modifier le contour de la lentille pour l'adapter à cette monture et/ou à la forme de lentille voulue.

Le détourage se décompose classiquement en deux opérations principales, dont une opération de débordage (souvent appelée "ébauche") et une opération de finition adaptée au type de montage.

Le débordage consiste à éliminer la partie périphérique superflue de la lentille ophtalmique concernée, pour en ramener le contour, qui est le plus souvent initialement circulaire, à celui quelconque du cercle ou entourage de la monture ou tout simplement à la forme esthétique souhaitée lorsque la monture est du type sans cercles. Cette opération de débordage est usuellement suivie d'une opération de chanfreinage qui consiste à abattre ou chanfreiner les deux arêtes vives du bord de la lentille débordée.

L'opération de finition dépend du montage à réaliser. Lorsque le montage est du type cerclé, on réalise un biseautage consistant à assurer la formation d'une nervure usuellement appelée biseau. Ce biseau est destiné à être engagé dans une rainure correspondante, communément appelée drageoir, ménagée dans le cercle ou entourage de la monture de lunettes dans lequel la lentille doit être montée. Lorsque la monture est du type sans cercle, le détourage de la lentille et, éventuellement, l'abattement des arrêtes vives (chanfreinage) sont suivis du perçage approprié des lentilles pour permettre la fixation des branches et du pontet nasal de la monture sans cercle. Enfin, lorsque le montage est du type semi-cerclé à fil Nylon, le chanfreinage est accompagné d'un rainurage consistant à ménager une rainure dans la tranche de la lentille, cette rainure étant destinée à accueillir le fil Nylon de la monture destiné à plaquer la lentille contre la partie rigide de la monture.

Habituellement, le détourage de la lentille est réalisé sur une meuleuse à commande numérique qui possède des moyens de maintien et d'entraînement en rotation de la lentille et plusieurs outils de travails appropriés aux différentes opérations à réaliser.

Les outils de travail comportent le plus souvent notamment une meule d'ébauche et une meule de biseautage qui sont montées sur un même arbre d'entraînement en rotation constituant le module de travail principal. Les outils de perçage, de rainage, de chanfreinage ainsi que des outils spécifiques pour usiner certains types de lentilles, tels que les lentilles dites de forte base sont disposés sur d'autres modules de travail distincts.

Une telle machine génère un encombrement important et un coût important du fait qu'elle nécessite de prévoir un moteur au moins par module de travail.

Le document FR2614227 propose, dans un mode de réalisation particulier représenté sur la figure 2 de ce document, de rassembler certains des outils de travail cités ci-dessus sur un porte-outils rotatif commun monté pour tourner autour d'un axe de rotation. Les outils de travail sont également montés rotatifs autour d'axes d'outils distincts sensiblement parallèle à l'axe de rotation du porte-outils. Selon l'enseignement de ce document, les outils de travail montés sur le porte-outils sont uniquement des outils de mise en forme de la périphérie de la lentille et les mobilités de ces outils de travail relativement à la lentille à usiner sont réduites.

La diversité des opérations de traitement de la lentille que permet de réaliser ce porte-outils est alors limitée.

### OBJET DE L'INVENTION

Le but de la présente invention est d'augmenter la diversité de traitement des lentilles offerte par une machine de détourage comportant un porte-outils rotatif tout en préservant la compacité de la machine.

A cet effet, l'invention propose une machine de détourage d'une lentille ophtalmique de lunettes comportant :
- des moyens de support et d'entraînement en rotation de la lentille autour d'un premier axe de rotation, la rotation de la lentille étant commandée par des premiers moyens de commande,
- un porte-outils monté pour tourner autour d'un deuxième axe de rotation, la rotation du porte-outils étant commandée par des deuxièmes moyens de commande,
- plusieurs outils de travail montés sur le porte-outils rotatifs autour d'axes d'outils, dont au moins deux outils de mise en forme de la périphérie de la lentille à détourer ayant des axes d'outils distincts,
- des troisièmes moyens de commande d'une mobilité relative d'écartement entre le premier axe de rotation et le deuxième axe de rotation,
- des moyens d'inclinaison pour permettre un pivotement relatif du porte-outils par rapport au premier axe de rotation autour d'un troisième axe de rotation sensiblement transversal au premier axe de rotation.

La mobilité d'inclinaison de l'axe du porte-outils, par rapport à l'axe de rotation de la lentille, permet de piloter l'angle d'inclinaison de l'axe de l'outil de perçage et de réaliser ainsi des trous de perçage suivant l'orientation et la forme souhaitées. Le fait que la mobilité d'inclinaison s'applique au porte-outils tout entier permet également de piloter l'inclinaison des axes des autres outils de mise en forme de la périphérie, de manière à restituer précisément la forme voulue à la périphérie de la lentille.

En particulier, il est ainsi possible de régler l'inclinaison, de l'axe de l'outil de finition de mise en forme de la périphérie de la lentille à détourer (typiquement, une meule de biseautage ou une meule de rainurage). Il est aussi possible de régler, à la faveur de la même mobilité d'inclinaison du porte-outils, l'inclinaison de l'outil d'ébauche de mise en forme de la périphérie de la lentille à détourer (typiquement, une meule d'ébauche de détourage), ce qui permet d'obtenir un chant de lentille ébaucher suivant une inclinaison correspondant à celle souhaitée pour sa finition. L'opération de finition est ainsi facilitée (puisqu'elle occasionne un enlèvement de matière moindre et plus homogène) et peut donc être effectuée plus rapidement et avec une meilleure précision, avec une usure de l'outil de finition moindre et plus homogène.

De plus, la mobilité d'inclinaison de l'axe du porte-outils peut être combinée, préalablement à l'usinage et/ou dynamiquement pendant l'usinage de la lentille pour obtenir un positionnement spatial idéal de l'outil par rapport à la lentille

Dans le cas de lentilles fortement cambrées sur la périphérie desquelles on souhaite former un biseau ou une rainure, l'inclinaison de l'axe d'un outil de travail, tel qu'un outil de biseautage ou de rainurage, permet d'adapter au mieux dans les trois dimensions la forme et l'orientation de chaque section de la périphérie biseautée ou rainée de la lentille et de limiter le phénomène de rognage du biseau ou de la rainure qui apparaît au cours de sa formation.

Un tel porte-outils offre ainsi une grande diversité de traitement des lentilles, au moyen d'un nombre de pièces et de mobilités réduits.

Chaque outil de travail étant monté seul sur son axe de rotation propre, il n'est plus nécessaire, lorsque cet outil de travail doit être remplacé, de démonter d'autre outils de travail (ce qui était le cas dans l'état de la technique lorsque plusieurs outils étaient montés sur un même axe). Seul l'outil de travail remplacé est alors réétalonné à l'exclusion des autres outils de travail, puisqu'ils n'ont pas été affectés par le remplacement.

En outre, grâce à la mobilité de rotation du porte-outils et à la répartition des outils autour de l'axe de rotation, il suffit d'un seul moteur pour amener l'outil de travail sélectionné en regard de la lentille. L'encombrement de la machine et son coût sont ainsi réduits.

Selon une première caractéristique avantageuse de l'invention, les outils de travail comportent un outil de perçage. Grâce à la présence de l'outil de perçage sur le porte-outils selon l'invention, il est possible de réaliser, à partir d'un même porte-outils et de ses seules mobilités, non seulement la mise en forme de la périphérie des lentilles au moyens des outils de travail correspondant, mais également le perçage des lentilles destinées à être montées dans des montures de type percées. Il n'est pas nécessaire de prévoir un module de perçage supplémentaire séparé.

Selon une autre caractéristique avantageuse de l'invention, l'axe d'outil de l'un au moins des outils de travail et le deuxième axe de rotation du porte-outils sont agencés de telle sorte que, lorsque cet outil de travail a été sélectionné et que le porte-outil a été tourné dans une position de travail de cet outil de travail, l'axe d'outil de cet outil de travail soit incliné par rapport au premier axe de rotation, typiquement d'un angle supérieur ou égal à 5 degrés. Cette inclinaison peut être fixe ou, avantageusement, dépendre de la courbure générale de la lentille et de la forme générale de son contour final souhaité après détourage.

Selon une autre caractéristique avantageuse de l'invention, il est prévu des moyens de sélection d'un des outils de travail pour procéder à une étape de travail de la lentille et des moyens de pilotage des deuxièmes moyens de commande conçus pour faire tourner le porte-outils autour du deuxième axe de rotation de manière à amener l'outil de travail sélectionné en regard de la lentille.

Avantageusement alors :
- les moyens d'inclinaison du porte-outils autour du troisième axe de rotation sont commandés par des quatrièmes moyens de commande pilotés, avant et/ou pendant l'usinage de la lentille, par les moyens de pilotage ;
- les moyens de pilotage sont conçus pour piloter les quatrièmes moyens de commande des moyens d'inclinaison du porte-outils autour du troisième axe de rotation en coordination avec les premiers moyens de commande de la rotation de la lentille,
- les moyens de pilotage sont conçus pour piloter les deuxièmes moyens de commande de la rotation du porte-outils autour du deuxième axe de rotation en coordination avec les premiers moyens de commande de la rotation de la lentille.

Ce pilotage est avantageusement effectué en fonction de la courbure locale ou globale de la surface avant, arrière ou moyenne de la lentille détourée au point d'usinage en cours et du rayon du contour de détourage souhaité en ce point.

Selon une autre caractéristique avantageuse de l'invention, les outils de mise en forme comportent au moins un outil de détourage adapté à détourer la lentille avec un chant plat et au moins un outil de finition consistant en l'un au moins des outils suivants : une meule de biseautage, un disque de chanfreinage, un outil de rainage, ou une meule de polissage.

Selon une autre caractéristique avantageuse de l'invention, les outils de mise en forme ont des diamètres différents et les axes de rotation des outils de mise en forme sont situés à différentes distances par rapport au deuxième axe de rotation. On peut en particulier prévoir que le porte-outils comporte une meule d'ébauche et une meule de finition de mise en forme de la périphérie de la lentille à détourer et que le diamètre de la meule d'ébauche est sensiblement supérieur à celui de la meule de finition, avec typiquement une différence de diamètre supérieure à 10 millimètres.

Selon une autre caractéristique avantageuse de l'invention, chaque outil de travail comportant une partie active qui, lors de la rotation de l'outil de travail autour de son axe, définit une enveloppe de travail, la portion utile de cette enveloppe de travail est située à une distance maximale du deuxième axe de rotation qui est la même pour deux aux moins des outils de mise en forme.

La course de la bascule pour amener la lentille en contact avec l'outil de travail est ainsi réduite. Il en résulte également une diminution de l'encombrement de la machine.

Selon une autre caractéristique avantageuse de l'invention, la machine comporte des moyens d'accouplement des outils de travail avec un moteur commun qui les entraîne en rotation, ces moyens d'accouplement étant conçus pour permettre le débrayage de l'accouplement de l'un au moins des outils de travail lorsque cet outil est inactif et pour embrayer l'accouplement de cet outil avec le moteur lorsque le porte-outils est en position de travail de cet outil. On débraye ainsi l'accouplement des outils inactifs, de manière à réduire l'usure des pignoneries d'entraînement et des paliers des outils et à réduire les nuisances sonores émises par la machine en opération, ce qui préserve la durée de vie et la précision de la machine.

Selon une autre caractéristique avantageuse de l'invention, le support de lentille comporte deux arbres agencés coaxialement selon le premier axe de rotation, pour serrer la lentille entre leurs extrémités libres en regard, ces arbres présentant chacun à leur extrémité libre une partie terminale de diamètre réduit. Il est ainsi possible de travailler la périphérie de lentilles de petits diamètres.

L'invention propose également un procédé de détourage d'une lentille au moyen d'une machine de détourage telle que définie ci-dessus, comportant les étapes suivantes :
- rotation du porte-outils autour du deuxième axe de rotation pour positionner l'outil de détourage en regard de la lentille,
- ébauche de débordage de la lentille au moyen de l'outil de détourage,
- rotation du porte-outils autour du deuxième axe de rotation pour positionner l'outil de finition en regard de la lentille,
- finition de biseautage ou de rainurage de la lentille au moyen de l'outil de finition avec une inclinaison non nulle du porte-outils autour du troisième axe de rotation.

Ce procédé est avantageusement appliqué systématiquement au détourage de toutes les lentilles indépendamment de leur cambrure et, en particulier, même au détourage des lentilles dont la face avant est inscrite dans une sphère de rayon supérieur à 12 centimètres.

L'invention propose encore un procédé de détourage d'une lentille au moyen d'une machine de détourage telle que définie ci-dessus, comportant les étapes suivantes :
- rotation du porte-outils autour du deuxième axe de rotation pour positionner l'outil de détourage en regard de la lentille,
- ébauche de débordage de la lentille au moyen de l'outil de détourage avec inclinaison non-nulle du porte-outils autour du troisième axe de rotation,
- rotation du porte-outils autour du deuxième axe de rotation pour positionner l'outil de finition en regard de la lentille,
- finition de biseautage ou de rainurage de la lentille au moyen de l'outil de finition, avec la même inclinaison du porte-outils.

On obtient ainsi un bord biseauté précis et convenablement orienté, au bénéfice de l'esthétique et de la précision du montage. On évite aussi de la sorte le risque qu'une reprise de détourage soit nécessaire, ce qui constitue un gain de temps appréciable pour l'opticien.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective d'une machine de détourage selon l'invention ;
- la figure 2 est une vue en perspective, selon un autre angle, de la machine de détourage selon l'invention et sur laquelle apparaissent des moyens d'inclinaison du porte-outils ;
- la figure 3 est une vue partielle en élévation du porte-outils, illustrant la finition du détourage d'une lentille de très petit diamètre au moyen d'une meule de biseautage débordant du porte-outils ;
- la figure 4 est une vue schématique partielle en perspective montrant les moyens d'accouplement débrayables des outils de travail avec le moteur commun qui les entraîne en rotation.

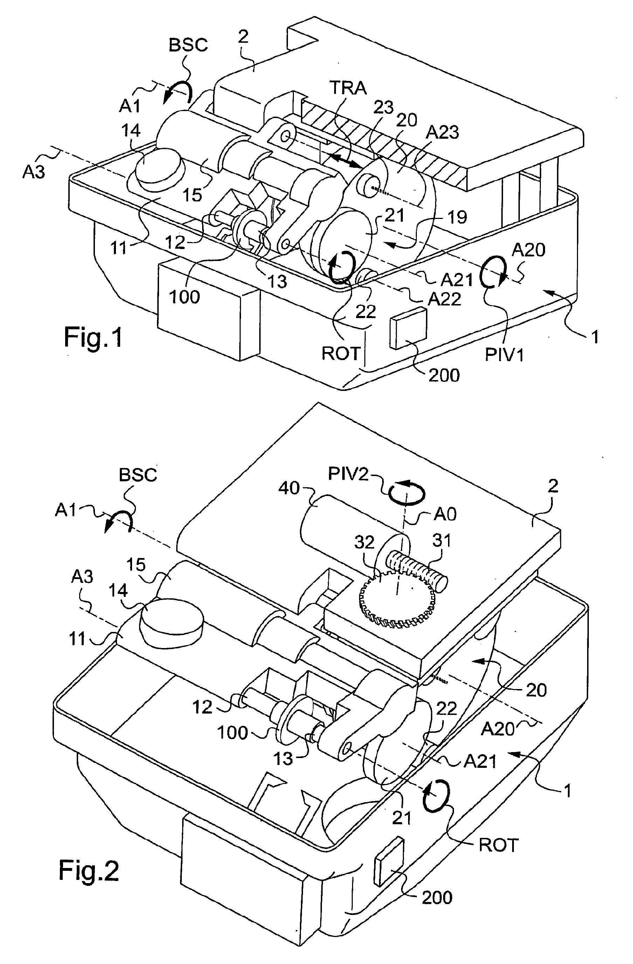

On a représenté sur les figures 1 et 2, une machine de détourage d'une lentille ophtalmique 100 correctrice et/ou solaire destinée à équiper une paire de lunettes. La machine comporte un carter 1 formant embase qui est moulé et qui comporte un fond avec quatre parois latérales. Le carter étant entièrement moulé, son étanchéité est assurée de manière fiable et pérenne.

Il est également prévu une platine 2 qui porte un dispositif à bascule 11 et des moyens d'usinage 19. Cette platine 2, qui n'est que partiellement représentée de façon schématique sur les figures 1 et 2, prend appui sur le carter 1 pour en former un capot. La platine 2 forme ainsi, lors du détourage de la lentille 100, avec le carter 1 un boîtier hermétique à l'intérieur duquel sont situés le dispositif à bascule 11 et les moyens d'usinage 19. La platine 2 formant capot possède une trappe d'accès commandée (non représentée) qui permet d'accéder à l'intérieur du boîtier ainsi formé pour y introduire et en retirer la lentille 100.

En outre, les composants mécaniques en mouvement des moyens d'usinage 19 et du dispositif à bascule 11 sont tous montés sur la platine 2, si bien que, lors d'une opération de maintenance, ces éléments ressortent d'un bloc du carter 1 avec la platine 2 et sont alors directement accessibles, ce qui facilite la maintenance. En particulier, l'opérateur effectuant l'opération de maintenance n'est pas gêné par les parois latérales du carter 1.

Le dispositif à bascule 11 est monté sur la platine 2 pour pivoter autour d'un axe de bascule A1. Cette mobilité de pivotement est notée BSC sur les figures 1 et 2.

Les arbres de serrage et d'entraînement en rotation 12, 13 sont ainsi mobiles par pivotement autour de l'axe de bascule A1 entre, d'une part, une position de travail dans laquelle ils sont situés dans le boîtier formé par le carter 1 et la platine-capot 2 et, d'autre part, une position de chargement dans laquelle ils ressortent de ce boîtier.

Le dispositif à bascule 11 comporte des arbres de serrage et d'entraînement en rotation 12, 13 de la lentille 100 qui s'étendent suivant un axe commun A3 parallèle à et distant de l'axe de bascule A1. Ces arbres 12, 13 sont mobiles en translation l'un par rapport à l'autre suivant l'axe A3 pour prendre et serrer la lentille 100 en étau.

Les arbres 12, 13 et, partant, de la lentille 100 sont de plus mobiles en rotation autour de leur axe A3. Cette rotation des arbres 12, 13, notée ROT sur les figures 1 et 2, est commandée par des premiers moyens de commande 14 appropriés tels qu'un groupe moto-réducteur pas à pas.

Les moyens d'usinage 19 comportent un porte-outils 20 qui présente une forme cylindrique de barillet d'axe A20 et possède une mobilité de rotation PIV1 autour de son axe A20. La rotation PIV1 du porte-outils 20 autour de l'axe A20 est commandée par des deuxièmes moyens de commande, non visibles, constitués typiquement d'un ensemble moto-réducteur pas à pas.

Le porte-outils 20 comporte plusieurs outils de travail 21, 22, 23 rotatifs autour d'axes d'outils A21, A22, A23 qui sont distincts et sensiblement parallèles à l'axe A20 du porte-outils.

Ces outils de travail 21, 22, 23 sont répartis autour de l'axe A20 du porte-outils et comportent en l'espèce deux outils de mise en forme de la périphérie 21, 22, et un outil de perçage 23.

Le porte-outils 20 est mobile en translation suivant l'axe A2, ce qui permet d'obtenir une mobilité relative des outils par rapport à la lentille suivant cet axe, ce qui est utile lors notamment du rainurage, du biseautage ou encore du perçage. Cette mobilité est appelée « transfert » et est notée TRA sur les figures.

En variante cette mobilité relative en translation de la lentille par rapport au porte-outils peut être obtenue par le fait que le dispositif à bascule 11 est conçu de telle sorte qu'un mouvement de translation de l'ensemble constitué des arbres 12, 13 et de la lentille, est permis.

En ce qui concerne l'architecture de l'entraînement en rotation des outils de travail, on peut prévoir que le porte-outils 20 comporte plusieurs arbres de sortie sur chacun desquels est monté un des outils de travail 21, 22, 23. Chacun de ces arbres est entraîné en rotation par une pignonerie (référencée en 28 pour la meule de finition 22), dont l'arbre d'entrée (notée 28.1 pour la pignonerie 28 précitée) est accouplé de façon débrayable à l'arbre de sortie d'un moteur commun 40 qui les entraîne en rotation.

Il est prévu des moyens d'accouplement débrayable des outils de travail avec le moteur commun. Ces moyens d'accouplement sont conçus pour débrayer les accouplements des outils de travail inactifs et embrayer l'accouplement de l'outil de travail actif avec le moteur commun 40 lorsque le porte-outils 20 est en position de travail de cet outil.

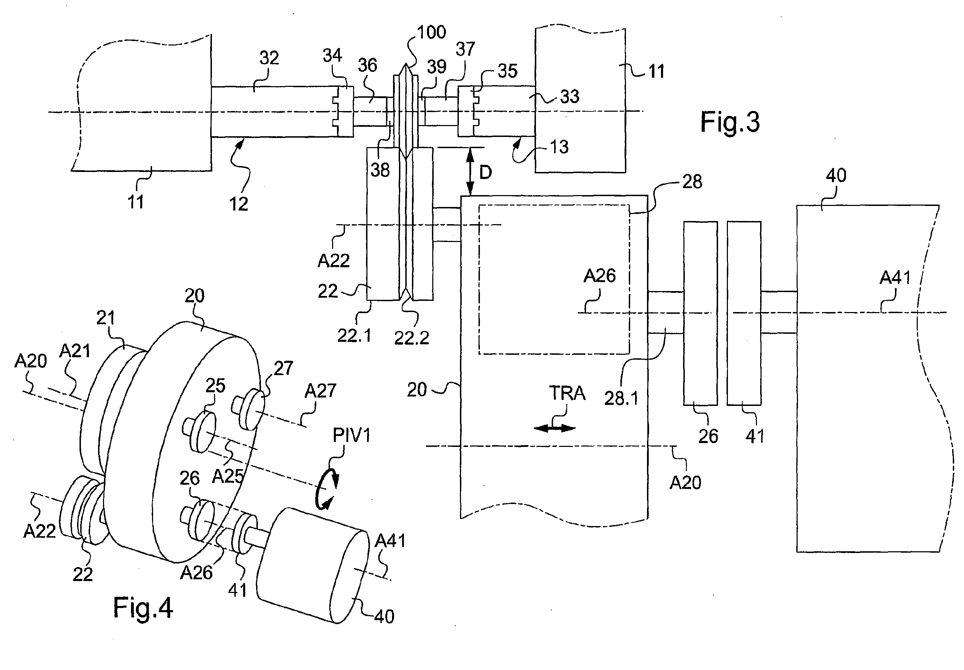

En l'espèce, comme illustré par les figures 3 et 4, on prévoit un accouplement magnétique débrayable individuel de chaque outil avec le moteur commun 40, cet accouplement magnétique peut être typiquement du type à disques en regard, tels que ceux commercialisés par la société Magnetic Technologies LTD. Cet accouplement magnétique comprend principalement, d'une part, des disques d'accouplement individuel 25, 26, 27 d'axes A25, A26, A27 associés respectivement aux outils de travail 21, 22, 23, chacun monté rotatif sur le porte-outil 20 en étant attelé à la pignonerie d'entraînement de l'outil concerné (dans la configuration illustrée par les figures 3 et 4, on a schématisé la pignonerie 28 d'entraînement de l'outil 22), et, d'autre part, un disque d'accouplement commun 41 attelé à l'arbre de sortie du moteur commun 40. Le disque commun d'accouplement 41 est disposé suivant un axe moteur A41 excentré par rapport à l'axe A2 du porte-outils 20 et les disques d'accouplement individuel 25, 26, 27 sont agencés suivant des axes A25, A26, A27 de même excentricité que l'axe moteur A41 du disque commun d'accouplement 41. Ainsi, lorsque le porte-outils 20 pivote autour de son axe A20 pour placer successivement les différents outils 21, 22, 23 en position de travail, les disques d'accouplement individuel 25, 26, 27 viennent successivement en regard du disque commun d'accouplement 41. Lorsque le porte-outil 20 s'immobilise dans une position angulaire donnée dans laquelle l'un des outils de travail (la meule de finition 22 dans l'exemple des figures 3 et 4) est en position de travail de la lentille 100, le disque d'accouplement individuel associé à cet outil (le disque 26 dans l'exemple des figures 3 et 4) est situé en regard du disque commun d'accouplement 41. Dans l'exemple illustré, les axes A26 et A41 sont alors coaxiaux.

En variante, on peut prévoir que l'arbre de sortie du moteur commun 40 entraîne en rotation un pignon commun d'accouplement et que les pignoneries d'entraînement des différents outils sont agencées de telle sorte que la rotation du porte-outils 20 provoque successivement l'engagement individuel de chacune de ces pignoneries avec le pignon commun d'accouplement. Chaque pignonerie d'entraînement de chaque outil vient individuellement en prise avec le pignon commun d'accouplement exclusivement lorsque le barillet porte-outils vient en position de travail de cet outil. Les pignoneries d'entraînement des autres outils sont alors débrayées de leur accouplement avec le moteur commun. A cet effet, le pignon commun d'accouplement est excentré par rapport à l'axe de rotation A2 du porte-outils 20.

Les outils de mise en forme 21, 22 comportent un outil de détourage 21 et un outil de finition 22. L'outil de détourage 21 est ici une meule d'ébauche et l'outil de finition 22 une meule de biseautage. La meule d'ébauche 21 comprend une face de débordage de révolution (en l'espèce cylindrique) autour de son axe de rotation A21 et la taille des grains de la surface d'ébauche est de l'ordre de 150 microns. La meule de finition 22 possède une face de débordage 22.1 de révolution autour de son axe de rotation A22 et une gorge de biseautage 22.2. En l'espèce, la face de débordage 22.1 est cylindrique, mais pourrait avantageusement être conique. Quelle que soit sa forme, la meule de finition 22 présente un diamètre maximum sensiblement inférieur à celui de la meule d'ébauche 21. La taille des grains de la meule de finition 22 est de l'ordre de 55 microns.

Bien que cela ne soit pas illustré par les figures, on peut avantageusement prévoir d'ajouter d'autres outils de finition tels qu'un outil de chanfreinage, un outil de rainurage, ou une meule de polissage.

La machine comporte des moyens d'inclinaison du porte-outils 20 par rapport au premier axe de rotation A3. Ces moyens d'inclinaison comportent une liaison de rotation autour d'un axe A0 du porte-outils 20 à la platine 2. Le porte-outils 20 possède ainsi une mobilité de pivotement PIV2 permettant d'incliner l'axe A20 du porte-outils, et par conséquent les axes des outils de travail, d'un certain angle par rapport à l'axe de rotation A3 de la lentille. Cette inclinaison du porte-outils 20 autour de l'axe A0 est commandée par des quatrième moyens de commande qui comportent en l'espèce un moteur 29 dont l'arbre de sortie est équipé d'une vis sans fin 31 en prise avec une roue 32 et une vis sans fin 31 qui permet de faire tourner le porte-outils 20 autour d'un axe vertical A0. Le moteur de commande 29 est piloté, avant et/ou pendant l'usinage de la lentille, par les moyens de pilotage 200.

On notera que les disques d'accouplement individuel 25, 26, 27 doivent, pour un bon accouplement magnétique, préférentiellement rester coaxiaux au disque commun d'accouplement 40, quelle que soit la position angulaire du porte-outils 20 autour de l'axe A0. On prévoira donc avantageusement que le moteur commun 40 et son disque commun d'accouplement 41 soient solidaires du porte-outils 20 dans son pivotement PIV2 autour de l'axe A0.

L'axe A0 de pivotement du porte-outils 20 est en l'espèce avantageusement situé à proximité des outils pour que le pivotement du porte-outils autour de cet axe ne s'accompagne pas d'un trop grand débattement transversal des outils.

Les outils de mise en forme 21, 22 possèdent des diamètres différents les uns des autres et les axes de rotation A21, A22 des outils de mise en forme 21, 22 sont situés à différentes distances par rapport au deuxième axe de rotation A20. En particulier, chaque outil de mise en forme 21, 22 comportant une partie active qui, lors de la rotation de l'outil de mise en forme 21, 22 autour de son axe A21, A22, A23, définit une enveloppe de travail, la portion utile de cette enveloppe de travail est située à une distance maximale de l'axe A20 qui est la même pour les outils de mise en forme 21, 22.

On peut avantageusement prévoir que l'axe d'outil de l'un au moins des outils de travail est incliné, typiquement d'un angle supérieur ou égal à 5 degrés, par rapport au deuxième axe de rotation A20 du porte-outils 20. Ainsi, lorsque cet outil de travail a été sélectionné et que le porte-outil a été tourné dans une position de travail de cet outil de travail, l'axe d'outil de cet outil de travail est orientable par rapport au premier axe de rotation de la lentille, à la faveur de la rotation du porte-outils 20 autour de l'axe A20.

Cet outil de travail à axe incliné peut typiquement être la meulette de biseautage 22 ayant une face de travail abrasive conique, ou un disque de rainurage. Dans ce cas, l'angle d'inclinaison peut être compris entre 10 et 30 degrés, avec un demi-angle de conicité identique.

D'autre part, comme illustré en particulier par la figure 3, on prévoit avantageusement que les meules 22 et 21 fassent radialement saillie du porte-outils 20. On observe ainsi sur la figure 3 un débordement radial D de la meule 22 par rapport au porte-outil 20. Ce débordement radial de la meule permet d'usiner, sans interférence de la bascule 11 avec le porte-outil 20, des lentilles 100 de très petit diamètre final.

Dans ce cas, l'usinage des lentilles de très petit diamètre est au surcroît permis grâce à un rétrécissement d'extrémité ménagé sur les arbres de serrage 12, 13 de la lentille 100. Chaque arbre de serrage 12, 13 possède en effet, par référence au corps du dispositif à bascule 11 dont il fait saillie, une partie proximale 32, 33 et une partie terminale 36, 37 de diamètre réduit par rapport à la partie proximale 32, 33. Ceci permet le passage des meules en regard des parties terminales rétrécies 36, 37, entre les parties proximales 32, 33 plus larges des arbres de serrage, tout en préservant une rigidité suffisante de ces arbres.

En l'espèce, l'extrémité libre de chaque partie proximale 32, 33 est pourvue de moyens d'engagement par un système du type crabot avec un embout rapporté 34, 35 pourvu d'un nez de diamètre réduit formant la partie terminale 36, 37. Le nez ou partie terminale 36 de l'arbre 12 coopère à son extrémité libre avec un accessoire ou gland de blocage 38 collé sur la face correspondante de 1 a lentille 100 pour matérialiser son référentiel. Cet accessoire de blocage est bien connu en lui-même et l'on pourra par exemple utiliser un accessoire du type de celui décrit dans le document EP1266723. L'extrémité libre du nez ou partie terminale 37 de l'arbre 13 est quant à elle pourvue d'une pastille d'interface 39 en élastomère offrant un coefficient de friction élevé avec la lentille, pour éviter son glissement et préserver l'état de sa surface.

La partie terminale 36, 37 de chaque arbre de serrage 12, 13 présente par exemple un décroché d'au moins 1 millimètre au diamètre par rapport à la partie amont. Le diamètre de la partie terminale est compris entre 8 et 18 millimètres. Dans l'exemple illustré, la partie terminale présente un diamètre de 10 millimètres et le corps principal 32, 33 un diamètre de 18 millimètres.

Les parties terminales 36, 37 des arbres de serrage s'étendent sur une longueur telle que leur somme est supérieure ou égale à la largeur maximum des meules d'ébauche et de finition retranchée de l'épaisseur minimum des lentilles à usiner. En pratique, l'épaisseur minimum des lentilles est de 2 millimètres. Par conséquent, en prévoyant des meules d'ébauche et de finition ayant chacune une largeur de 17 millimètres, la somme des longueurs des parties terminales rétrécies 36, 37 des deux arbres 12, 13 est d'au moins 15 millimètres. La longueur de chaque partie terminale rétrécie 36, 37 ne doit pas non plus être trop importante, afin de préserver une rigidité suffisante des arbres de serrage. En l'espèce, la longueur de la partie terminale rétrécie 36, 37 de chaque arbre de serrage est d'environ 8 millimètres.

Il est prévu des moyens de sélection d'un des outils de travail 21, 22, 23 pour procéder à une étape de travail de la lentille 100 et des moyens de pilotage de la mobilité de pivotement du porte-outils 20 conçus pour amener l'outil de travail 21, 22, 23 sélectionné en regard de la lentille 100.

Les moyens de pilotage 200 pilotent des moyens de commande de la mobilité de pivotement du porte-outils 20, tel qu'un dispositif d'indexation en rotation du porte-outils 20. Le dispositif d'indexation en rotation du porte-outils est conçu de telle sorte que les outils de travail 21, 22, 23 sont immobilisés pendant le détourage.

Pour permettre un réglage dynamique de l'entraxe entre le premier axe de rotation A3 du verre et le deuxième axe de rotation A20 du porte-outils 20 lors du débordage, on utilise la mobilité de pivotement BSC, dite de bascule, du dispositif à bascule 11 autour de l'axe de bascule A1. Cette mobilité BSC est commandée par des troisièmes moyens de commande, constitués typiquement d'un ensemble moto-réducteur 15.

Pour l'usinage de la lentille ophtalmique suivant un contour donné, la mobilité de restitution transversale RES du dispositif à bascule 11 et la mobilité de rotation ROT des arbres 12, 13 de la lentille sont pilotées en coordination par une unité de traitement électronique et informatique 200, dûment programmée à cet effet, pour que tous les points du contour de la lentille ophtalmique soient successivement ramenés au bon diamètre.

L'unité de traitement électronique et informatique 200 comporte les moyens de pilotage des mobilités des différents organes de la machine de détourage tels que le dispositif à bascule et le porte-outils. L'unité de traitement électronique et informatique 200 consiste ici en une carte électronique conçue pour piloter en coordination les différentes mobilités des outils de travail et des arbres de serrage et d'entraînement en rotation de la lentille conformément au procédé de détourage automatisé qui sera exposé ultérieurement.

La machine de détourage décrite ci-dessus peut être utilisée pour la mise en oeuvre d'un procédé de détourage de la lentille selon les étapes suivantes.

La lentille est serrée et centrée entre les arbres de maintien et d'entraînement en rotation 12, 113 du dispositif à bascule. L'unité de traitement électronique et informatique 200 pilote la mobilité de pivotement du porte-outils 20 pour positionner l'outil de détourage 21 en regard de la lentille. Puis, l'unité de traitement électronique et informatique 200 pilote les mobilités de rotation ROT de la lentille, de déplacement TRA et de restitution RES pour réaliser une ébauche de débordage de la lentille 100 au moyen de l'outil de détourage 21.

Durant cette étape d'ébauche, la lentille est dégrossie de telle façon que son contour s'approche de la forme que l'on souhaite lui donner.

De préférence, on aura pris soin, pour cette opération d'ébauche, de régler, à la faveur de la mobilité d'inclinaison du porte-outils, l'inclinaison de l'outil de détourage 21, d'un angle d'inclinaison correspondant à celui souhaité pour la finition du chant de la lentille.

Dans le cas du traitement d'une lentille pour monture de type percée, une fois l'ébauche terminée, le porte-outils pivote autour de son axe A20 pour positionner l'outil de finition 22 en regard de la lentille et procède à la finition du débordage avec la partie de la périphérie de la meule de finition dépourvue de gorge de biseautage.

Puis, à l'issue du processus de finition, le porte-outils 20 pivote autour de son axe A20 pour positionner l'outil de perçage 23 en regard de la lentille. La mobilité de pivotement PIV2 pour incliner l'axe A20 du porte-outils par rapport à l'axe de rotation A3 de la lentille est alors pilotée de manière à orienter correctement l'outil de perçage pour percer la lentille.

Dans le cas du détourage d'une lentille à percer, une fois l'ébauche terminée, le porte-outils pivote autour de son axe A20 pour positionner l'outil de finition 22 en regard de la lentille.

L'unité de traitement électronique et informatique 200 pilote de même les mobilités des différents organes de la machine pour réaliser une finition de biseautage. En variante, on peut également prévoir en disposant un outil de rainurage sur le porte outils de procéder au rainurage de la lentille.

La mobilité de pivotement PIV2 pour incliner l'axe A20 du porte-outils 20 par rapport à l'axe de rotation A3 de la lentille peut être pilotée de manière à obtenir la forme voulue de la périphérie de la lentille.

Préférentiellement, la mobilité de pivotement PIV2 est pilotée pour former un biseau ou une rainure sur la périphérie d'une lentille de forte base de manière à limiter le rognage du biseau ou de la rainure lors de sa formation. La face avant de la lentille étant inscrite dans une sphère, on définit une lentille de forte base comme étant une lentille dont le rayon de la sphère est inférieur à 12 centimètres. On pourra à cet effet programmer les moyens de pilotage pour piloter, à la faveur de la mobilité de pivotement PIV2 du porte-outils 20 autour de l'axe A0, l'inclinaison de l'outil par rapport à la lentille, comme exposé dans la demande de brevet français FR06/08987 déposée le 13/10/2006 au nom de la demanderesse.

Les moyens de pilotage 200 sont conçus pour, dans certains cas, piloter les quatrièmes moyens de commande des moyens d'inclinaison du porte-outils 20 autour de l'axe A0 non seulement avant le début de l'usinage de la lentille pour amener l'outil en position de travail, mais également de façon dynamique au cours de l'usinage de la lentille, pendant la rotation de la lentille autour de l'axe A3 et en coordination avec les premiers moyens de commande de la rotation de la lentille. Un tel pilotage dynamique de l'inclinaison du porte-outils 20 est utile en particulier lors d'un travail de finition de la périphérie de la lentille tel qu'un biseautage ou un rainurage pour obtenir un montage plus précis sur la monture. Ce pilotage est alors effectué de préférence en fonction de la forme 3D de la monture.

De plus, pour améliorer encore la précision de l'usinage lors d'un tel travail de finition de la périphérie de la lentille, les deuxièmes moyens de commande de la rotation du porte-outils 20 autour du deuxième axe de rotation A20 peuvent avantageusement être pilotés par les moyens de pilotage 200, programmés à cet effet, en coordination avec les premiers moyens de commande 14 de la rotation de la lentille.

On pourra à cet effet programmer les moyens de pilotage pour piloter, à la faveur de la double orientabilité du porte-outils 20 autour des axes A0 et A20, la position de l'outil par rapport à la lentille comme exposé dans la demande de brevet français FR0511895 déposée le 24/11/2005 au nom de la demanderesse.

On prévoit en outre, dans ce cas, que l'axe d'outil de l'outil de travail (biseautage ou rainurage) et le deuxième axe de rotation A20 du porte-outils 20 sont agencés de telle sorte que, lorsque cet outil de travail a été sélectionné et que le porte-outil a été tourné dans une position de travail de cet outil de travail, l'axe d'outil de cet outil de travail soit incliné par rapport au premier axe de rotation d'un certain angle. La rotation du porte-outils 20 autour du deuxième axe de rotation A20 en fonction de la position angulaire de la lentille produit alors tout son effet.

Ce procédé peut être appliqué systématiquement au détourage des lentilles indépendamment de la valeur de leur rayon de courbure et notamment pour les lentilles dites de faible base, c'est-à-dire dont le rayon de la sphère est supérieur à 12 centimètres.

Pour l'usinage des lentilles revêtues d'un revêtement tel qu'un traitement anti-salissures qui les rend glissantes, on peut prévoir que le porte-outils est pourvu d'un outil de fraisage une taille. L'unité de pilotage est programmée pour utiliser cet outil de fraisage pour l'ébauche de détourage de ce type de lentilles glissantes. Le couple transmis à la lentille est ainsi réduit, ce qui évite son glissement sur son support. Une telle découpe par fraisage est décrite plus en détail dans la demande de brevet français FR06/04493 déposée le 19/05/2006 par la demanderesse.

Lorsque la lentille à détourer est du type glissante et que, de plus, le diamètre final souhaité après détourage est trop petit pour permettre un détourage par fraisage à ce diamètre, l'unité de pilotage est programmée pour effectuer une ébauche de détourage en deux sous-étapes :
- fraisage de la lentille pour la découper à un diamètre minimum seuil, supérieur au diamètre prévu, prédéfini pour éviter tout conflit du porte-outils ou du moteur d'entraînement de l'outil de fraisage avec les moyens de support et d'entraînement en rotation 12, 13 de la lentille 100,
- meulage de fin d'ébauche de détourage avec la meule d'ébauche au diamètre voulu.

## Revendications

1. Machine de détourage d'une lentille ophtalmique (100) de lunettes comportant:
- des moyens de support et d'entraînement en rotation (12, 13) de la lentille (100) autour d'un premier axe de rotation (A3), la rotation de la lentille étant commandée par des premiers moyens de commande (14),
- un porte-outils (20) monté pour tourner autour d'un deuxième axe de rotation (A20), la rotation du porte-outils (20) étant commandée par des deuxièmes moyens de commande,
- plusieurs outils de travail (21, 22, 23) montés sur le porte-outils (20) rotatifs autour d'axes d'outils (A21, A22, A23), dont au moins deux outils de mise en forme (21, 22) de la périphérie de la lentille à détourer ayant des axes d'outils (A21, A22) distincts,
- des troisièmes moyens de commande d'une mobilité relative d'écartement entre le premier axe de rotation (A3) et le deuxième axe de rotation (A20),
**caractérisée en ce qu'**elle comporte des moyens d'inclinaison (30, 31, 32) pour permettre un pivotement relatif du porte-outils (20) par rapport au premier axe de rotation (A3) autour d'un troisième axe de rotation (A0) sensiblement transversal au premier axe de rotation (A3).

2. Machine de détourage selon la revendication précédente, dans laquelle les outils de travail (21, 22, 23) comportent un outil de perçage (23).

3. Machine de détourage selon l'une des revendications précédentes, dans laquelle l'axe d'outil (A22) de l'un au moins des outils de travail (22) et le deuxième axe de rotation (A20) du porte-outils (20) sont agencés de telle sorte que, lorsque cet outil de travail (22) a été sélectionné et que le porte-outil a été tourné dans une position de travail de cet outil de travail, l'axe d'outil (A22) de cet outil de travail (22) soit incliné par rapport au premier axe de rotation (A3).

4. Machine de détourage selon l'une des revendications précédentes, comportant des moyens de sélection (200) d'un des outils de travail (21, 22, 23) pour procéder à une étape de travail de la lentille (100) et des moyens de pilotage (200) des deuxièmes moyens de commande conçus pour faire tourner le porte-outils (20) autour du deuxième axe de rotation (A20) de manière à amener l'outil de travail (21, 22, 23) sélectionné en regard de la lentille (100).

5. Machine de détourage selon la revendication précédente, dans laquelle les moyens d'inclinaison du porte-outils (20) autour du troisième axe de rotation (A0) sont commandés par des quatrièmes moyens de commande pilotés, avant et/ou pendant l'usinage de la lentille, par les moyens de pilotage (200).

6. Machine de détourage selon la revendication précédente, dans laquelle les moyens de pilotage (200) sont conçus pour piloter les quatrièmes moyens de commande des moyens d'inclinaison du porte-outils (20) autour du troisième axe de rotation (A0) en coordination avec les premiers moyens de commande (14) de la rotation de la lentille.

7. Machine de détourage selon l'une des revendications 4 à 6, dans laquelle les moyens de pilotage (200) sont conçus pour piloter les deuxièmes moyens de commande de la rotation du porte-outils (20) autour du deuxième axe de rotation (A20) en coordination avec les premiers moyens de commande (14) de la rotation de la lentille.

8. Machine de détourage selon l'une des revendications précédentes, dans laquelle les outils de mise en forme (21, 22) comportent au moins un outil de détourage (21) adapté à détourer la lentille avec un chant plat et au moins un outil de finition (22) consistant en l'un au moins des outils suivants : une meule de biseautage, un disque de chanfreinage, un outil de rainurage, ou une meule de polissage.

9. Machine de détourage selon l'une des revendications précédentes, dans laquelle les outils de mise en forme (21, 22) ont des diamètres différents les uns des autres et les axes de rotation (A21, A22) des outils de mise en forme (21, 22) sont situés à différentes distances par rapport au deuxième axe de rotation (A20).

10. Machine de détourage selon l'une des revendications précédentes, dans laquelle chaque outil de travail (21, 22, 23) comportant une partie active qui, lors de la rotation de l'outil de travail (21, 22, 23) autour de son axe (A21, A22, A23), définit une enveloppe de travail, la portion utile de cette enveloppe de travail est située à une distance maximale du deuxième axe de rotation (A20) qui est la même pour deux aux moins des outils de mise en forme (21, 22).

11. Machine de détourage selon l'une des revendications précédentes, comportant des moyens d'accouplement (25, 26, 27, 41) des outils de travail (21, 22, 23) avec un moteur commun (41) qui les entraîne en rotation, ces moyens d'accouplement étant conçus pour permettre le débrayage de l'accouplement de l'un au moins des outils de travail lorsque cet outil est inactif et pour embrayer l'accouplement de cet outil avec le moteur commun (40) lorsque le porte-outils (20) est en position de travail de cet outil.

12. Machine de détourage selon l'une des revendications précédentes, dans lequel le support de lentille comporte deux arbres (12, 13) agencés coaxialement selon le premier axe de rotation (A3), pour serrer la lentille entre leurs extrémités libres en regard, ces arbres présentant chacun à leur extrémité libre une partie terminale (16, 17) de diamètre réduit.

13. Procédé de détourage d'une lentille au moyen d'une machine de détourage selon l'une des revendications précédentes, comportant les étapes suivantes :
- rotation du porte-outils (20) autour du deuxième axe de rotation (A20) pour positionner l'outil de détourage (21) en regard de la lentille,
- ébauche de débordage de la lentille (100) au moyen de l'outil de détourage (21),
- rotation du porte-outils (20) autour du deuxième axe de rotation (A20) pour positionner l'outil de finition (22) en regard de la lentille,
- finition de biseautage ou de rainurage de la lentille au moyen de l'outil de finition (22) avec une inclinaison non nulle du porte-outils autour du troisième axe de rotation (A0) .

14. Procédé selon la revendication précédente, appliqué systématiquement au détourage des lentilles indépendamment de leur cambrure.

15. Procédé selon la revendication précédente, appliqué aux lentilles dont la face avant est inscrite dans une sphère de rayon supérieur à 12 centimètres.

16. Procédé de détourage d'une lentille au moyen d'une machine de détourage selon l'une des revendications 1 à 11, comportant les étapes suivantes:
- rotation du porte-outils (20) autour du deuxième axe de rotation (A20) pour positionner l'outil de détourage (21) en regard de la lentille,
- ébauche de débordage de la lentille (100) au moyen de l'outil de détourage (21) avec inclinaison non-nulle du porte-outils autour du troisième axe de rotation (A0),
- rotation du porte-outils (20) autour du deuxième axe de rotation (A20) pour positionner l'outil de finition (22) en regard de la lentille,
- finition de biseautage ou de rainurage de la lentille au moyen de l'outil de finition (22), avec la même inclinaison du porte-outils (20).

## Claims

1. A shaper machine for shaping an ophthalmic lens (100) for eyeglasses, the machine comprising:
- means (12, 13) for supporting the lens (100) and for driving it in rotation about a first axis of rotation (A3), the rotation of the lens being driven by first drive means (14);
- a tool-carrier (20) mounted to turn about a second axis of rotation (A20), the rotation of the tool-carrier (20) being driven by second drive means;
- a plurality of working tools (21, 22, 23) mounted on the tool-carrier (20) to rotate about respective tool axes (A21, A22, A23), at least two of the tools comprising tools (21, 22) for shaping the periphery of the lens for shaping and having distinct tool axes (A21, A22); and
- third drive means for driving relative spacing movements between the first axis of rotation (A3) and the second axis of rotation (A20);
the machine being **characterized in that** it includes swivel means (30, 31, 32) enabling the tool-carrier (20) to pivot relative to the first axis of rotation (A3) about a third axis of rotation (A0) that extends substantially transversely relative to the first axis of rotation (A3).

2. A shaper machine according to the preceding claim, wherein the working tools (21, 22, 23) include a drill tool (23).

3. A shaper machine according to any preceding claim, wherein the axis (A22) of at least one of the working tools (22) and the second axis of rotation (A20) of the tool-carrier (20) are arranged in such a manner that when said working tool (22) has been selected and the tool-carrier has been turned into a working position for said working tool, the axis (A22) of said working tool (22) is inclined relative of the first axis of rotation (A3).

4. A shaper machine according to any preceding claim, including selector means (200) for selecting one of the working tools (21, 22, 23) to proceed with a step of working the lens (100), and control means (200) for controlling the second drive means designed to cause the tool-carrier (20) to turn about the second axis of rotation (A20) in such a manner as to bring the selected working tool (21, 22, 23) into register with the lens (100).

5. A shaper machine according to the preceding claim, wherein the means for swiveling the tool-carrier (20) about the third axis of rotation (A0) are driven by fourth drive means before and/or during machining of the lens and under the control of the control means (200).

6. A shaper machine according to the preceding claim, wherein the control means (200) are designed to control the fourth drive means for driving the means for swiveling the tool-carrier (20) about the third axis of rotation (A0) in coordination with the first drive means (14) for rotating the lens.

7. A shaper machine according to any one of claims 4 to 6, wherein the control means (200) are designed to control the second drive means for turning the tool-carrier (20) about the second axis of rotation (A20) in coordination with the first drive means (14) for rotating the lens.

8. A shaper machine according to any preceding claim, wherein the shaper tools (21, 22) include at least one edger tool (21) for shaping the lens to have a flat edge face, and at least one finisher tool (22) constituted by at least one of the following tools: a beveling grindwheel, a chamfering disk, a grooving tool, and a polishing tool.

9. A shaper machine according to any preceding claim, wherein the shaper tools (21, 22) are of different diameters from one another and the axes of rotation (A21, A22) of the shaper tools (21, 22) are situated at different distances from the second axis of rotation (A20).

10. A shaper machine according to any preceding claim, wherein each working tool (21, 22, 23) comprises an active portion that defines a working envelope during rotation of the working tool (21, 22, 23) about its axis (A21, A22, A23), the useful portion of said working envelope being situated at a maximum distance from the second axis of rotation (A20) that is the same for at least two of the shaper tools (21, 22).

11. A shaper machine according to any preceding claim, including coupler means (25, 26, 27, 41) for coupling the working tools (21, 22, 23) with a common motor (41) that drives them in rotation, the coupler means being designed to enable the coupling of at least one of the working tools to be declutched when said tool is inactive and to clutch the coupling between said tool and the common motor (41) when the tool-carrier (20) is in the working position of said tool.

12. A shaper machine according to any preceding claim, wherein the lens support comprises two shafts (12, 13), both arranged on the first axis of rotation (A3), for clamping the lens between their facing free ends, each shaft having a terminal portion (16, 17) of reduced diameter at its free end.

13. A method of shaping a lens by means of a shaper machine according to any preceding claim, the method comprising the following steps:
- turning the tool-carrier (20) about the second axis of rotation (A20) so as to position the edger tool (21) in register with the lens;
- roughing out edging of the lens (100) by means of the edger tool (21);
- turning the tool-carrier (20) about the second axis of rotation (A20) to position the finisher tool (22) in register with the lens; and
- finishing the beveling or the grooving of the lens by means of the finisher tool (22) with the tool-carrier being at a non-zero angle of inclination about the third axis of rotation (A0).

14. A method according to the preceding claim, that is applied systematically to shaping lenses independently of their camber.

15. A method according to the preceding claim, applied to lenses having a front face that is inscribed in a sphere of radius greater than 12 centimeters.

16. A method of shaping a lens by means of a shaper machine according to any one of claims 1 to 11, the method comprising the following steps:
- turning the tool-carrier (20) about the second axis of rotation (A20) so as to position the edger tool (21) in register with the lens;
- roughing out edging of the lens (100) by means of the edger tool (21) with the tool-carrier at a non-zero angle of inclination about the third axis of rotation (A0);
- turning the tool-carrier (20) about the second axis of rotation (A20) to position the finisher tool (22) in register with the lens; and
- finishing the beveling or the grooving of the lens by means of the finisher tool (22) at the same angle of inclination of the tool-carrier (20).

## Patentansprüche

1. Schneidemaschine für Brillengläser (100) mit:
- Haltemitteln und Antriebsmitteln zum Drehen (12,13) der Gläser (100) um eine erste Rotationsachse (A3), wobei das Drehen des Glases durch erste Antriebsmittel (14) gesteuert wird,
- einem montierten Werkzeugträger (20) zum Drehen um eine zweite Rotationsachse (A20), wobei das Drehen des Werkzeugträgers (20) durch zweite Antriebsmittel gesteuert wird,
- mehrere Arbeitswerkzeuge (21, 22, 23), die an einem um Werkzeugachsen (A21, A22, A23) drehbaren Werkzeugträger (20) montiert sind, wobei mindestens zwei Formgebungswerkzeuge (21, 22) für den zu beschneidenden Glasrand verschiedene Werkzeugachsen (A21, A22) haben,
- dritten Antriebsmitteln für eine relative Abstandsmobilität zwischen der ersten Rotationsachse (A3) und der zweiten Rotationsachse (A20),
**dadurch gekennzeichnet, dass** sie Schrägstellmittel (30, 31, 32) umfasst, um ein relatives Schwenken des Werkzeugträgers (20) in Bezug auf die erste Rotationsachse (A3) um eine dritte Rotationsachse (A0) zu ermöglichen, die im Wesentlichen quer zur ersten Rotationsachse (A3) liegt.

2. Schneidemaschine nach vorausgehendem Anspruch, bei der die Arbeitsgeräte (21,22,23) ein Bohrwerkzeug (23) umfasst.

3. Schneidemaschine nach einem der vorausgehenden Ansprüche, bei der die Werkzeugachse (A22) von mindestens einem der Arbeitsgeräte (22) und die zweite Rotationsachse (A20) des Werkzeugträgers (20) derart angeordnet sind, dass wenn dieses Arbeitsgerät (22) ausgewählt wurde und der Werkzeugträger in eine Arbeitsposition dieses Arbeitsgeräts gedreht wurde, die Werkzeugachse (A22) dieses Arbeitsgeräts (22) in Bezug zur ersten Rotationsachse (A3) geneigt ist.

4. Schneidemaschine nach einem der vorausgehenden Ansprüche, mit Auswahlmitteln (200) eines der Arbeitsgeräte (21, 22, 23), um einen Bearbeitungsschritt des Brillenglases (100) durchzuführen, und Steuermitteln (200) für die zweiten Antriebsmittel, die zum Drehen des Werkzeugträgers (20) um die zweite Rotationsachse (A20) vorgesehen sind, sodass das ausgewählte Arbeitsgerät (21, 22, 23) gegenüber dem Brillenglas (100) angebracht wird.

5. Schneidemaschine nach vorausgehendem Anspruch, bei der die Schrägstellmittel des Werkzeugträgers (20) um die dritte Rotationsachse (A0) vor und/oder während der Bearbeitung des Brillenglases von vierten Antriebsmitteln angetrieben werden, die von den Steuermitteln (200) gesteuert werden.

6. Schneidemaschine nach vorausgehendem Anspruch, bei der die Steuermittel (200) konzipiert sind, um die vierten Antriebsmittel der Schrägstellmittel des Werkzeugträgers (20) um die dritte Rotationsachse (A0) koordiniert mit den ersten Antriebsmitteln (14) für das Drehen des Brillenglases zu steuern.

7. Schneidemaschine nach einem der Ansprüche 4 bis 6, bei der die Steuermittel (200) konzipiert sind, um die zweiten Antriebsmittel für das Drehen des Werkzeugträgers (20) um die zweite Rotationsachse (A20) koordiniert mit den ersten Antriebsmitteln (14) für das Drehen des Brillenglases zu steuern.

8. Schneidemaschine nach einem der vorausgehenden Ansprüche, bei der die Formgebungswerkzeuge (21, 22) mindestens ein Schneidewerkzeug (21) umfassen, das sich zum Zuschneiden des Brillenglases mit einer ebenen Kante eignet, und mindestens ein Werkzeug für die Endbearbeitung (22), das aus mindestens einem der folgenden Werkzeuge besteht: ein Schleifgerät, eine Scheibe zum Abfasen, ein Werkzeug zum Auskehlen oder eine Polierscheibe.

9. Schneidemaschine nach einem der vorausgehenden Ansprüche, bei der die Formgebungswerkzeuge (21,22) alle unterschiedliche Durchmesser haben und die Rotationsachsen (A21, A22) der Formgebungswerkzeuge (21, 22) in unterschiedlichen Distanzen in Bezug auf die zweite Rotationsachse (A20) angeordnet sind.

10. Schneidemaschine nach einem der vorausgehenden Ansprüche, bei der jedes Arbeitsgerät (21,22,23) einen aktiven Bereich umfasst, der beim Drehen des Arbeitsgeräts (21,22,23) um seine Achse (A21,A22,A23) eine Arbeitsoberfläche definiert, wobei sich der Nutzbereich dieser Arbeitsoberfläche in einer maximalen Distanz zur zweiten Rotationsachse (A20) befindet, die für mindestens zwei der Formgebungswerkzeuge (21,22) die gleiche ist.

11. Schneidemaschine nach einem der vorausgehenden Ansprüche, mit Mitteln zum Koppeln (25, 26, 27, 41) der Arbeitsgeräte (21, 22, 23) mit einem gemeinsamen Motor (41), der sie rotierend antreibt, wobei diese Mittel zum Koppeln so konzipiert sind, dass sie das Auskoppeln von mindestens einem der Arbeitsgeräte ermöglichen, wenn dieses Gerät nicht aktiv ist sowie das Einkoppeln dieses Werkzeugs mit dem gemeinsamen Motor (40), wenn der Werkzeugträger (20) für dieses Werkzeug in Arbeitsposition ist.

12. Schneidemaschine nach einem der vorausgehenden Ansprüche, bei der die Halterung für das Brillenglas zwei Wellen (12, 13) umfasst, die entlang der ersten Rotationsachse (A3) koaxial angeordnet sind, um das Brillenglas zwischen den freien gegenüberliegenden Enden einzuspannen, wobei diese Wellen an ihrem freien Ende einen Endbereich (16,17) mit reduziertem Durchmesser aufweisen.

13. Schneideverfahren für Brillengläser mittels einer Schneidemaschine nach einem der vorausgehenden Ansprüche, mit folgenden Arbeitsschritten:
- Drehen des Werkzeugträgers (20) um die zweite Rotationsachse (A20), um das Schneidewerkzeug (21) gegenüber dem Brillenglas zu positionieren,
- Vorläufiges Zuschneiden des Brillenglases (100) mittels dem Schneidewerkzeug (21),
- Drehen des Werkzeugträgers (20) um die zweite Rotationsachse (A20), um das Werkzeug zur Endbearbeitung (22) gegenüber dem Brillenglas zu positionieren,
- Endbearbeitung mit Abfasen oder Auskehlen des Brillenglases mittels einem Werkzeug zur Endbearbeitung (22) mit einer Schrägstellung ungleich null des Werkzeugträgers um die dritte Rotationsachse (A0).

14. Verfahren nach vorausgehendem Anspruch, das systematisch und unabhängig von deren Krümmung zum Zuschneiden von Brillengläsern angewendet wird.

15. Verfahren nach vorausgehendem Anspruch, das bei Brillengläsern angewendet wird, deren Vorderseite sich in einer Sphäre mit einem Radius von über 12 Zentimeter befindet.

16. Schneideverfahren für ein Brillenglas mittels einer Schneidemaschine nach einem der Ansprüche 1 bis 11, das folgende Schritte umfasst:
- Drehen des Werkzeugträgers (20) um die zweite Rotationsachse (A20), um das Schneidewerkzeug (21) gegenüber dem Brillenglas zu positionieren,
- Vorläufiges Zuschneiden des Brillenglases (100) mittels dem Schneidewerkzeug (21) mit Schrägstellung ungleich null des Werkzeugträgers um die dritte Rotationsachse (A0),
- Drehen des Werkzeugträgers (20) um die zweite Rotationsachse (A20), um das Werkzeug für die Endbearbeitung (22) gegenüber dem Brillenglas zu positionieren,
- Endbearbeitung mit Abschrägen oder Auskehlen des Brillenglases mittels dem Werkzeug zur Endbearbeitung (22), mit derselben Schrägstellung des Werkzeugträgers (20).
